Europäisches Patentamt

European Patent Office

Office européen des brevets

(11) Veröffentlichungsnummer: **0 518 379 A2**

## (12) EUROPÄISCHE PATENTANMELDUNG

(21) Anmeldenummer: **92109969.3**

(22) Anmeldetag: **13.06.92**

(51) Int. Cl.5: **B01D 53/34**, C02F 1/52

(30) Priorität: **13.06.91 DE 4119486**
**13.06.91 DE 4119485**
**28.08.91 DE 4128565**

(43) Veröffentlichungstag der Anmeldung:
**16.12.92 Patentblatt 92/51**

(84) Benannte Vertragsstaaten:
**AT BE CH DE ES FR GB IT LI LU NL SE**

(71) Anmelder: **Kalkwerke H. Oetelshofen GmbH & Co.**
**Hahnenfurth 5**
**W-5600 Wuppertal 11(DE)**

(72) Erfinder: **Gebhard, Georg, Dr.**
**Oberwehnrath**
**W-5226 Reichshof(DE)**

(74) Vertreter: **Türk, Gille, Hrabal, Leifert**
**Brucknerstrasse 20**
**W-4000 Düsseldorf 13(DE)**

(54) Verfahren zur Entfernung von organischen und anorganischen Schadstoffen aus gasförmigen, flüssigen und/oder festen Materialien.

(57) Verfahren zur Entfernung von organischen und anorganischen Schadstoffen aus gasförmigen, flüssigen und/oder festen Materialien durch Chemisorption, wobei als Absorbens zur Chemisorption entweder

a) eine wäßrige Lösung eines oder mehrerer wasserlöslicher Aluminate bei einer Hydroxylionen-Konzentration, die die Ausfällung von Aluminiumhydroxid ausschließt, oder

b) ein Absorptionsmittel dient, das erhältlich ist aus einem oder mehreren wasserlöslichen Aluminaten und einer oder mehreren in Wasser ganz oder teilweise löslichen Calciumverbindungen in Gegenwart von Wasser, sowie gegebenenfalls in Gegenwart eines oder mehrerer Carbonate und/oder Kohlendioxid und/oder eines Kohlendioxid enthaltenden Gases.

Die Absorptionsmittel weisen lamellare Schichtstrukturen auf und entsprechen dem Typus

$$[Ca_4 Al_2 (OH)_{12}]^{2+} [CO_3.aq]^{2-}$$
$$[Ca_4 Al_2 (OH)_{12}]^{2+} [OH/0,5CO_3.aq]^{2-}$$

und/oder

$$[Ca_4 Al_2 (OH)_{12}]^{2+} [(OH)^2.aq]^{2-}$$

worin aq Kristallwasser darstellt.

EP 0 518 379 A2

Die Erfindung betrifft die Entfernung von organischen und/oder anorganischen Schadstoffen aus Gasen, Flüssigkeiten und/oder Feststoffen. Insbesondere können organische Schadstoffe durch Absorption beispielsweise aus Abgasen, Abwässern, Sickerwässern oder Deponiematerialien entfernt werden.

Industrielle Abgase, Rauchgase von Verbrennungsanlagen, industrielle Abwässer sowie industrielle Abfall-Feststoffe und Deponiemüll enthalten zahlreiche umweltbelastende Schadstoffe organischer und anorganischer Natur.

Unter den organischen Schadstoffen haben sich in den letzten Jahrzehnten insbesondere aromatische und aliphatische Verbindungen, wie monoaromatische Lösungsmittel, beispielsweise Benzol, Toluol, Phenole, polycyclische aromatische Verbindungen (PAH), jedoch auch halogenierte Kohlenwasserstoffe, wie fluorierte oder chlorierte Kohlenwasserstoffe, Dioxine, Furane usw. als besonders gefährlich erwiesen.

Neben den organischen Schadstoffen sind zahlreiche anorganische Materialien stark umweltschädlich, beispielsweise saure Verbindungen, wie flüchtige Säuren, Schwefeldioxid, Stickstoffoxide, jedoch Schwermetalle, wie Quecksilber, Cadmium usw. und Schwermetallionen.

In den letzten Jahrzehnten wurden umfangreiche Anstrengungen unternommen, derartige Schadstoffe zu entfernen. Bei Entfernung saurer Verbindungen hat dabei der Einsatz von Absorptionsmitteln auf Kalkbasis große Bedeutung erlangt. Problematischer ist die Entfernung von organischen Schadstoffen, die chemisch wenig reaktiv sind und für die daher bisher die Verwendung von Adsorptionsmitteln empfohlen wurde. So wird in der DE-OS 39 15 934 die Reinigung von Abgasen beschrieben, bei der Adsorptionsmittel auf der Basis von Calciumhydroxid beschrieben werden, das mit oberflächenaktiven Substanzen, wie Aktivkohle, Aluminiumoxid und Kieselgel, versetzt ist. Derartige Adsorptionsmittel weisen den Nachteil auf, daß Mischungen aus verschiedenen Adsorptionsmaterialien bereitgestellt werden müssen, die darüberhinaus nur eine physikalisch adsorbierende und keine chemisch absorbierende Wirkung haben. Adsorptiv gebundene organische Schadstoffe können leicht von dem Adsorptionsmittel entweichen, beispielsweise beim Schütteln während des Transports, so daß eine erneute Umweltgefährdung nicht auszuschließen ist.

Es wurde auch versucht Schwermetalle durch Ausfällung mit Sulfiden oder durch Ausfällung als Hydroxide zu beseitigen, jedoch erfordert dies einerseits den Einsatz von toxischen Sulfiden und andererseits entstehen voluminöse Aufällungen, die schwer zu entwässern sind und der Gefahr der Wiederauflösung in Form von Hydroxylionen enthaltenden Komplexen unterliegen, und deren Ausfällung nicht quantitativ erfolgt.

In der EP-A-0 250 626 wird ein Verfahren zur Entfernung von Sulfat aus Industrieabwässern beschrieben, bei dem Calciumaluminiumsulfate in der Form von Ettringit ausgefallt werden. Hierzu werden dem Abwasser Calciumaluminate zugesetzt, wobei der pH-Wert im Bereich von 11,2 bis 11,8 gehalten wird. Die Entfernung anderer Schadstoffe wird nicht beschrieben.

In der US-A-4 931 264 wird die Entfernung von Schwefel aus heißen Rauchgasen beschrieben, wozu eine wäßrige Aufschlämmung einer Quelle für Calcium-Alkali und einer Quelle für reaktives Siliciumdioxid oder Aluminiumoxid verwendet wird. Die Entfernung anderer Schadstoffe wird ebenfalls nicht beschrieben.

Aufgabe der Erfindung ist die Bereitstellung eines Verfahrens, das zur sicheren Entfernung von organischen und anorganischen Schadstoffen aus Gasen, Flüssigkeiten und/oder Feststoffen geeignet ist, und das sich in wirtschaftlicher und einfacher Weise durchführen läßt.

Es hat sich gezeigt, daß diese Aufgabe gelöst werden kann durch ein einen Gegenstand der Erfindung bildendes Verfahren zur Entfernung von Schadstoffen aus gasförmigen, flüssigen und/oder festen Materialien, das dadurch gekennzeichnet ist, daß man die Schadstoffe durch Chemisorption entfernt, wobei als Absorbens zur Chemisorption entweder

a) eine wäßrige Lösung eines oder mehrerer wasserlöslicher Aluminate bei einer Hydroxylionen-Konzentration, die die Ausfällung von Aluminiumhydroxid ausschließt, oder

b) ein Absorptionsmittel dient, das erhältlich ist aus einem oder mehreren wasserlöslichen Aluminaten und einer oder mehreren in Wasser ganz oder teilweise löslichen Calciumverbindungen in Gegenwart von Wasser, sowie gegebenenfalls in Gegenwart eines oder mehrerer Carbonate und/oder Kohlendioxid und/oder eines Kohlendioxid enthaltenden Gases.

Durch die Verfahrensvariante a) des erfindungsgemäßen Verfahrens lassen sich insbesondere Schwermatallionen, wie beispielsweise zweiwertige Ionen von Schwermetallen, wie Cadmium, Kupfer, Nickel, Kobalt, Zink und Blei, einzeln oder auch gleichzeitig, besonders wirksam aus Gasen und wäßrigen Flüssigkeiten entfernen.

Hierzu wird beim erfindungsgemäßen Verfahren ein wasserlösliches Aluminat, wie beispielsweise Natriumaluminat zur Bildung von unlöslichen Komplexen mit Schwermetallionen verwendet.

Zwar wurde Natriumaluminat bereits bei der Frischwasseraufbereitung oder der Abwasserklärung als Flockungsmittel eingesetzt, jedoch unter derartigen Bedingungen, daß Aluminiumhydroxid

2

ausgefällt wurde, welches als phsikalisches Adsorbens dient. Im Gegensatz hierzu wird erfindungsgemäß so gearbeitet, daß die Hydroxylionen-Konzentration der eingesetzten oder erhaltenden Lösungen so hoch ist, daß eine Ausfällung von Aluminumhydroxid vermieden wird. Die OH-Ionen Konzentration wird dabei so groß gehalten, daß das Aluminumhydroxid komplex gelöst bleibt.

Bei der erfindungsgemäßen Verfahrensvariante a) kann bei pH-Werten von 6 bis 14, besonders bevorzugt bei hohen pH-Werten 8 bis 14 z. B. 10 bis 14 gearbeitet werden. Zur Erzielung derartiger pH-Werte wird eine ausreichende Menge an wasserlöslichem Aluminat verwendet; gegebenenfalls kann der pH-Wert auch durch Zusatz von Laugen, wie beispielsweise Alkalihydroxide, z. B. Natronlauge, Kalilauge oder Ammoniumhydroxid, auf hohen Werten gehalten werden.

Beim erfindungsgemäßen Verfahren, Verfahrensvariante a) aber auch Verfahrensvariante b) kann z. B. bei Temperaturen von 20 bis 90°C, bevorzugt von 60 bis 85°C gearbeitet werden.

Als wasserlösliche Aluminate können erfindungsgemäß insbesondere Alkalialuminat, Natriumaluminat, Kaliumaluminat, Ammoniumaluminat oder Erdalkimetallaluminate, wie Calciumaluminat, eingesetzt werden. Bevorzugt wird erfindungsgemäß für die Verfahrensvarianten a) und b) als wasserlösliches Aluminat rohes Natriumaluminat verwendet, das als Nebenprodukt (Lauge) bei der Herstellung von Aluminiumhydroxid entsteht. Durch die erfindungsgemäße Verfahrensweise werden mit den Schwermetallionen komplexe Verbindungen gebildet, die ein äußerst geringes Löslichkeitsprodukt aufweisen, also praktisch quantitativ aus wäßrigen Lösungen entfernt werden. Bei den unlöslichen ausfällbaren Verbindungen handelt es sich um Verbindungen mit Schichtstruktur, mit einer kationischen Hauptschicht und einer anionischen Zwischenschicht.

Im Falle von zweiwertigen Metallionen ergibt sich eine Schichtstruktur der folgenden Formel
Hauptschicht:

$[X_4 \, Al_2 \, (OH)_{12}]^{2+}$ oder $[X_6 \, Al_2 \, (OH)_{16}]^{2+}$

Zwischenschicht:

$[Y \cdot aq]^{2-}$

X =    zweiwertiges Schwermetallion, wie $Cd^{2+}$, $Cu^{2+}$, $Ni^{2+}$, $Co^{2+}$, $Zn^{2+}$, $Pb^{2+}$
Y =    Anion, wie $2Cl^-$, $SO_4^{2-}$, $CO_3^{2-}$

Erfindungsgemäß können jedoch nicht nur zweiwertige Schwermetallionen, sondern auch dreiwertige und einwertige Schwermetallionen entfernt werden. Es entstehen dabei komplexe Verbindungen mit Schichtstrukturen der folgenden Formeln
Von dreiwertigen Schwermetallionen:
Hauptschicht:

$[X_4 \, Al_2 \, (OH)_{12}]^{6+}$ oder $[X_6 \, Al_2 \, (OH)_{16}]^{8+}$

X =    dreiwertiges Schwermetall, wie $As^{3+}$, $Sb^{3+}$
Zwischenschicht:

$[Y \cdot aq]^{6-}$

Y =    Anion, wie $6Cl^-$, $3SO_4^{2-}$
Im Falle von einwertigen Schwermetallionen:
Hauptschicht:

$[X_6 \, Al_2 \, (OH)_{12}]^{2+}$ oder $[X_{12} \, Al_2 \, (OH)_{16}]^{2+}$

X =    einwertiges Schwermetall, wie Quecksilber, Thallium
Zwischenschicht:

$[Y \cdot aq]^{2-}$

Y =    Anion, wie $2Cl^-$, $SO_4^{2-}$
In den vorstehend aufgezeigten Formeln stellt "aq" Kristallwasser dar. Dessen Menge hängt von den Reaktionsbedingungen ab; sie liegt in der Praxis beispielsweise bei 4 bis 14, z. B. 8 bis 14. Bei zweiwertigen Ionen liegen häufig 4 Moleküle Kristallwasser vor.

In den vorstehenden Formeln kan Y außer den angegebenen Beispielen auch andere Anionen darstellen. Letztere können auch als Schadstoffe durch die Ausfällung der unlöslichen Verbindungen entfernt werden. Beispiele für Anionen Y sind:

metallhaltige Anionen sowie solche Anionen, die Elemente der Gruppen III, IV, V und VI des Periodensystems der Elemente und/oder Halogene enthalten. Besonders bevorzugt werden Schwermetall enthaltende Anionen entfernt. Beispiele für Anionen sind solche, die Bor, Stickstoff, Selen, Arsen, Antimon, Tellur, Schwermetalle, wie Chrom, Halogene, wie Chlor, Brom oder Jod, Stickstoff und/oder Bor enthalten. Spezielle Beispiele sind $SeO_4^{2-}$, $AsO_4^{3-}$, $CrO_4^{2-}$, $JO_3^-$, $BrO_3^-$, $NO_2^-$, $BO_3^-$ und/oder komplexe borhaltige Anionen, $NO_3^-$ und Halogenide wie Chlorid und Bromid.

Die Absorption erfolgt quantitativ; die gebildeten Schwermetallausfällungen setzen sich aus den Lösungen ab. Die Überstehende Lösung kann abdekantiert oder filtriert werden.

Die bei der erfindungsgemäßen Reinigung entstehenden lamellaren Schichtstrukturen weisen den Vorteil auf, daß sie bei hohen pH-Werten keiner Wiederauflösung unterliegen und eine quantitative Ausfällung der Schwermetall-Schadstoffe ermöglichen. Die erhaltenen Ausfällungen sind nicht voluminös und können leicht beseitigt werden. Die Ausfällungen weisen darüber hinaus den Vorteil auf, daß organische Schadstoffe, wie beispielsweise Dioxin, in die lamellare Schichtstruktur eingebaut werden können, in der sie beispielsweise das Kristallwasser gänzlich oder teilweise ersetzen können. Auch die so erhaltenden Komplexe sind äußerst stabil und ermöglichen eine zusätzliche Entfernung organischer Schadstoffe.

Als weitere Vorteil ergibt sich, daß bei Erhitzen der erfindungsgemäß durch chemische Reaktion (Chemisorption) gebildeten ausgefällten Verbindungen völlig unlösliche Schwermetalloxide gebildet werden. Erfindungsgemäß bilden sich aus den erhaltenen Ausfüllungen Verbindungen vom sogenannten Spinelltyp, die besonders stabil sind. Wird nach dem Stand der an Aluminiumoxid nur adsorptiv angelagert. so können die Schwermetalle beispielsweise beim Brennen verdampfen. Außerdem sind die erfindungsgemäß erhaltenen Ausfällungen pH-stabil. Es kann also angesäuert werden bis auf pH 1, ohne daß das Schwermetall wieder in Lösung geht. Bei Aluminiumoxid als Adsorptionsmaterial würde alles wieder in Lösung gehen. Zu dem adsorbieren die erfindungsgemäßen Ausfällungen außer dem Schwermetall auch noch Anionen, was einen weiteren Reinigungseffekt bietet.

Im Rahmen der Erfindung hat es sich gezeigt, daß aus wäßrigen Lösungen oder Aufschlämmungen von Calciumverbindungen unter Zusatz von wasserlöslichen Aluminaten gebildete Absorptionsmittel b) nicht nur zur Entfernung anorganischer saurer Schadstoffe oder von Schwermetallen geeignet sind, sondern daß sie überraschenderweise auch organische Schadstoffe chemisch zu binden vermögen. Dies gilt auch für hochmolekulare organische Schadstoffe, wie beispielsweise polycyclische aromatische Kohlenwasserstoffe (PAH), die in das Kristallgitter der gebildeten Absorptionsverbindungen eingelagert werden.

Zur Bereitstellung der erfindungsgemäßen Absorptionsmittel werden in Wasser ganz oder teilweise lösliche Calciumverbindungen mit wasserlöslichen Aluminaten umgesetzt.

Bevorzugt wird zur Herstellung der erfindungsgemäßen Absorptionsmittel b) mit einem Molverhältnis von ganz oder teilweise löslicher Calciumverbindung (berechnet als Calciumoxid oder Calciumhydroxid) zum wasserlöslichen Aluminat (berechnet als Aluminiumhydroxid) von mindestens 2:1 gearbeitet. Die Herstellung des Absorptionsmittels b) kann bei beliebigem pH-Wert, beispielsweise von 10 bis 14, erfolgen. Beim Einsatz im erfindungsgemäßen Chemisorptionsverfahren wird bevorzugt bei pH-Werten bis zu maximal 10,5, bevorzugt bis zu 10 gearbeitet. Die Herstellung des Absorbens b) kann bei beliebiger Temperatur, insbesondere bei 20 bis 90°C, bevorzugt 60 bis 85°C erfolgen.

Als in Wasser ganz oder teilweise lösliche Calciumverbindungen kommen Calciumsalze in Frage, wie beispielsweise Calciumchlorid, Calciumnitrat oder Calciumsulfat. Als Calciumverbindungen verwendbar und besonders bevorzugt sind Calciumhydroxid und Calciumoxid.

Als wasserlösliche Aluminate sind Alkalialuminate, wie Natriumaluminat, Caliumaluminat, Ammoniumaluminat, bevorzugt Natriumaluminat, Erdalkalialuminate, wie Calciumaluminat, geeignet, es können jedoch auch Aluminat enthaltende Materialien, wie Tonerde und Zemente, die aluminathaltig sind, eingesetzt werden. Die Aluminate können auch in situ gebildet werden, beispielsweise aus frisch gefälltem Aluminiumhydroxid durch Zusatz von Alkalihydroxiden, wie Natriumhydroxid oder Erdalkalimetallhydroxiden, wie Calciumhydroxid. Beispielsweise kann aus einer Lösung eines Aluminiumsalzes, wie Aluminiumchlorid mit einer Lauge, wie Natriumhydroxid oder Calciumhydroxid, das Aluminiumhydroxid ausgefällt und zum entsprechenden Aluminat gelöst werden.

Bei der Zugabe von Aluminaten zu Calciumverbindungen werden in Anwesenheit von Wasser definierte Verbindungen gebildet. Diese Verbindungen sind lamellar aufgebaut aus Schichten von Kationen und Anionen der folgenden Formeln
kationische Hauptschicht:

$$Ca_4[Al_2(OH)_{12}]^{2+}$$

anionische Zwischenschicht:

$$[X_2.aq]^{2-} \text{ oder } [Y.aq]^{2-}$$

worin X ein einwertiges Anion, wie $OH^-$, $Cl^-$, $NO_3^-$ und Y ein zweiwertiges Anion, wie $SO_4^{2-}$ oder $CO_3^{2-}$, ist.

aq stellt Kristallwasser dar. Die Menge des Kristallwassers hängt von den Herstellungsbedingungen, insbesondere der Temperatur und dem pH-Wert ab; sie liegt in der Praxis in der Größenordnung von 6 bis 12 Molekülen Wasser pro Anion.

Der Grundkörper der vorstehenden Verbindungen, worin X die Hydroxylgruppe darstellt, wurde für kristallographische Untersuchungen bereits beschrieben. Er hat die Formel $[Ca_4Al_2(OH)_{12}]^{2+}[(OH)_2aq]^{2-}$; seine Verwendung als Absorbens wurde bisher nicht beschrieben.

Im Rahmen der Erfindung hat es sich gezeigt, daß Carbonat enthaltende Modifikationen besonders stabil sind. Diese können aus den vorstehend genannten Verbindungen entstehen, worin X bzw. Y von Carbonat verschieden sind, beispielsweise durch Zusatz von Carbonationen oder durch Arbeiten in Anwesenheit von Kohlendioxid oder einem Kohlendioxid enthaltenden Gas. Die Anionen X bzw. Y werden dann durch Carbonatanionen ersetzt. Die Carbonate können auch direkt entstehen, wenn die Absorptionsmittel von vornherein in Anwesenheit von Carbonationen und/oder Kohlendioxid hergestellt werden. Die Carbonate liegen als Monocarbonat-Hydrate oder Halbcarbonat-Hydrate vor, in denen die kationische Hauptschicht unverändert ist, wobei die anionische Zwischenschicht folgende Formeln aufweist Halbcarbonat-Hydrat:

$$[OH/0,5CO_3 . aq]^{2-}$$

Monocarbonat-Hydrat:

$$[CO_3 . aq]^{2-} .$$

Bei den vorstehenden Chloriden, Nitraten, Sulfaten und Carbonaten (Halbcarbonat-Hydrat und Monocarbonat-Hydrat) handelt es sich um neue bisher in der Literatur nicht beschriebene Verbindungen.

Überraschenderweise hat es sich im Rahmen der Erfindung gezeigt, daß in die Strukturen der vorstehenden Verbindungen organische Moleküle eingelagert werden Können. Es kann davon ausgegangen werden, daß organische Moleküle in die Zwischenschichten der lamellaren Strukturen eingebaut werden, wobei sie zumindest einen Teil des dortigen Hydratwassers ersetzen. Ionen und polare organische Schadstoffe können auch das Anion X bzw. Y der Zwischenschicht ganz oder teilweise ersetzen.

Untersuchungen mit Anthracen haben z. B. gezeigt, daß eine Absorption von Anthracen beispielsweise am Monocarbonat erfolgte, die zu folgender definierter kristallchemischen Verbindung führte

$$[Ca_4 Al_2 (OH)_{12}]^{2+} [CO_3 . AC/H_2O]^{2-}$$

AC = Anthracen.

Untersuchungen mit Anthracencarbonsäure (ACC) führten zu dem Ergebnis, daß folgende neue Verbindung entsteht:

$$[Ca_4 Al_2(OH)_{12}]^{2+} [ACC.nH_2O]^{2-}$$

(n hängt von den Temperaturen und der Luftfeuchte ab)
Die Röntgendaten ergeben in Stapelrichtung mit c = 19,4 - 19,8 Å den Nachweis einer neuen Verbindung.

Auf diesen Möglichkeiten, organische Verbindungen in die Kristallstruktur einzubauen, beruht die Fähigkeit der erfindungsgemäßen Absorptionsmittel b) organische Schadstoffe zu absorbieren.

Im Rahmen der vorliegenden Erfindung hat es sich gezeigt, daß statt einer Absorption von organischen Schadstoffen oder zusätzlich zu der Absorption von organischen Schadstoffen anionische Schadstoffe an den Absorptionsmitteln b) adsorbiert werden können. Bei den anionischen Schadstoffen kann es sich um organische anionische oder um anorganische anionische Schadstoffe handeln. Die anionischen Schadstoffe können in die später erläuterten anionischen Zwischenschichten der Absorptionsmittel eingebaut werden; dabei können die dort gegebenenfalls bereits enthaltenen Anionen, wie z. B. Carbonationen, durch die Schadstoffanionen ganz oder teilweise ersetzt werden.

Erfindungsgemäß lassen sich sämtliche anionischen Schadstoffe aus Gasen, Flüssigkeiten und Feststoffen entfernen. Besonders bevorzugt werden metallhaltige Anionen sowie solche Anionen entfernt, die Elemente der Gruppen III, IV, V und VI des Periodensystems der Elemente und/oder Halogene enthalten. Besonders bevorzugt werden Schwermetall enthaltende Anionen entfernt. Beispiele für Anionen sind solche, die Bor, Stickstoff, Selen, Arsen, Antimon, Tellur, Schwermetalle, wie Chrom, Halogene, wie Chlor, Brom oder Jod, Stickstoff und/oder Bor enthalten. Spezielle Beispiele, für die sich die vorliegende Erfindung als besonders günstig erwiesen hat, sind $SeO_4^{2-}$, $SeO_3^{2-}$, $AsO_4^{3-}$, $CrO_4^{2-}$, $JO_3^{-}$, $BrO_3^{-}$, $NO_2^{-}$, $BO_3^{-}$ und/oder Komplexe borhaltige Anionen, $NO_3^{-}$ und Halogenide, wie Chlorid und Bromid.

Bei der Entfernung von anionischen Schadstoffen können diese die Anionen X und/oder Y in den vorstehend beschriebenen lamellar aufgebauten Verbindungen mit Schichten von Kationen und Anionen der folgenden Formeln:
kationische Hauptschicht:

$$Ca_4 [Al_2 (OH)_{12}]^{2+}$$

anionische Zwischenschicht:

$$[X_2 . aq]^{2-} \text{ oder } [Y.aq]^{2-}$$

ganz oder teilweise ersetzen.

Erfindungsgemäß ist es auch möglich, die Absorptionsmittel in situ, beispielsweise in schädliche Anionen enthaltenden Flüssigkeiten herzustellen, wobei die schädlichen Anionen dann direkt in die Absorptionsmittel eingebaut werden.

Überraschenderweise hat es sich gezeigt, daß bei der erfindungsgemäßen Verwendung gebildete Schadstoff-Anionen enthaltende Komplexe weiterhin zur Absorption von organischen Schadstoffen geeignet sind, so daß eine kombinierte Anwendung nach wie vor möglich ist.

Bei der Herstellung der erfindungsgemäß einsetzbaren Absorptionsmittel b) kann auf verschiedene Weise vorgegangen, werden. Im Prinzip genügt es, die Calciumverbindung mit dem Aluminat zu vermischen. Wasser kann vorher oder nachher zugesetzt werden. Soll die entsprechende Monocarbonat- oder Halbcarbonat-Verbindung hergestellt werden, so muß vor, während oder nach der Reaktion der Calciumverbindung mit dem Aluminat Carbonat und/oder Kohlendioxid anwesend sein.

Beispielsweise ist es möglich, die Calciumverbindung, wie trockener Kalk (CaO) oder Calciumhydroxid mit dem trockenen Aluminat, wie Natriumaluminat, zu vermischen, anschließend mit Wasser zu versetzen und gegebenenfalls Carbonationen und/oder Kohlendioxid zuzufügen.

Auf diese Weise ist es beispielsweise auch möglich, das Absorptionsmittel in situ in beispielsweise einem zu reinigenden Gas zu bilden. So können die Calciumverbindung, wie Calciumoxid, Calciumhydroxid und das Aluminat, wie Natriumaluminat und gegebenenfalls ein Carbonat, wie Calciumcarbonat, in Rauchgase eingeblasen werden, die Kohlendioxid und geringe Wassermengen enthalten. Dabei entsteht das schichstrukturartige Absorptionsmittel, das organische Schadstoffe aus den Rauchgasen absorbieren kann.

In gleicher Weise können sich die erfindungsgemäßen Absorptionsmittel in wäßrigen Lösungen oder Aufschlämmungen bilden, beispielsweise in Abwässern, die Anionen, wie Sulfat, Chlorid und/oder Nitrat enthalten, nämlich durch Zusatz von Calciumverbindungen, wie Calciumhydroxid und Aluminaten, wie Natriumaluminat.

Gemäß einer bevorzugten Ausführungsform werden die erfindungsgemäßen Absorptionsmittel b) in wäßriger Suspension hergestellt, wobei die Calciumverbindung in Wasser suspendiert und/oder gelöst wird, und mit dem Aluminat versetzt wird, wobei gegebenenfalls in Anwesenheit von Carbonationen und/oder mit Einleiten von Kohlendioxid bzw. einem Kohlendioxid enthaltenden Gas gearbeitet werden kann.

Als Quelle für Carbonationen kommen lösliche Carbonate, wie Alkalicarbonate, beispielsweise Natriumcarbonat und Erdalkalicarbonate, insbesondere Calciumcarbonat, in Frage. Kohlendioxid kann beispielsweise in Form kohlendioxidhaltiger Gase, wie Luft, Rauchgase oder andere Abgase, zugeführt werden. Die erfindungsgemäßen Absorptionsmittel werden auf diese Weise in suspendierter Form erhalten. Sie können als Suspension eingesetzt werden. Jedoch ist es auch möglich, das suspendierende Wasser zu entfernen, beispielsweise durch Dekantier- oder Filtriervorgänge.

Im folgenden wird die Erfindung anhand einer besonders bevorzugten Ausführungsform beschrieben, bei der wäßrige Suspensionen von Calciumhydroxid bzw. Calciumoxid (im folgenden als Kalksuspensionen bezeichnet) bereitet werden und mit Natriumaluminat als Feststoff oder in wäßriger Suspension versetzt werden. Es versteht sich jedoch, daß die im folgenden angegebenen Merkmale jedoch nicht auf diese spezielle Ausführungsform beschränkt sind, sondern in gleicher Weise für andere Calcimverbindungen und/oder Aluminate gelten.

Die zur Herstellung einer besonderen Ausführungsform der erfindungsgemäßen Absorptionsmittel verwendeten Kalksuspensionen unterliegen hinsichtlich ihrer Konzentration keiner Begrenzung. Sie können konzentriert sein und weisen beispielweise einen Gehalt an Calciumverbindungen, insbesondere Calciumhydroxid bzw. Calciumoxid von 5 bis 50 Gew.-%, bevorzugt von 10 bis 20 Gew.-% auf. Sie können durch übliches nasses Löschen bzw. Wasserzusatz zu gebranntem Kalk hergestellt werden.

Zur Herstellung des Halb- oder Monocarbonat-Hydrats können die Kalksuspensionen suspendiertes Calciumcarbonat enthalten. Das Calciumcarbonat ist in der Praxis in einer Menge von 1 bis 10 Gew.-%, bevorzugt 1 bis 2 Gew.-%, vorhanden. Es genügen beispielsweise die beim Brennen des Kalks noch vorhandenen Restmengen an Calciumcarbonat in der Größenordnung von 2 Gew.-%.

Zur Herstellung der Halb- oder Monocarbonat-Hydrate ist es nicht erforderlich Calciumcarbonat der Kalksuspension zuzusetzen. Es kann vor, während oder nach der Zugabe des Natriumaluminats, Kohlendioxid eingeleitet werden. Die Halb- und Monocarbonat-Hydrate können somit beispielsweise auch in situ beispielsweise bei der Reinigung von Kohlendioxid enthaltenden Abgase gebildet werden.

Das Aluminat, z. B. Natriumaluminat wird der gegebenenfalls Carbonat enthaltenden Kalksuspension in einer Menge von 0,1 bis 50 Gew.-%, bevorzugt 1 bis 10 Gew.-% zugesetzt. Der Zusatz des Aluminats kann in Form von trockenem pulverförmigen Material oder in Form von Lösungen (z. B. Natriumaluminat oder Suspensionen) erfolgen.

Die Umsetzung erfolgt durch Vermischen, wobei im Falle der Suspension beispielsweise gerührt werden kann. Die Einhaltung bestimmter Zusatzmengen von Calciumverbindungen, Aluminaten, Carbonaten ist nicht erforderlich, da es auch nicht erforderlich ist, die Absorptionsmittel in stoechiometrischen Mengen zu bilden. Es ist durchaus möglich, Überschüsse, beispielsweise an Calciumverbindungen, wie Calciumhydroxid, einzusetzen und beizubehalten.

Beim Zusatz des Aluminats, z. B. Natriumaluminats entstehen sowohl im Falle der carbonatfreien Arbeitsweise als auch im Falle der Bildung der Carbonate wäßrige Suspensionen, in denen die Absorptionsmittel in feinteiliger Form als Feststoffe vorliegen.

Die wäßrigen Suspensionen können als solche zur Absorption verwendet werden. Es ist jedoch auch möglich, die erhaltenen Feststoffe als solche einzusetzen. Die Gewinnung kann beispielsweise durch Filtrieren oder Sedimentieren erfolgen. Als Filter kommen beispielsweise Bandfilter, in Frage, eine Sedimentation kann in sogenannten Eindikkern, d. h. Gefäßen mit langer Verweilzeit, erfolgen.

Es hat sich gezeigt, daß die erfindungsgemäß als Absorptionsmittel einsetzbaren Suspensionen in pH-Wert-Bereichen von 10 bis 14 stabil sind. Beim Einsatz als Absorptionsmittel wird bevorzugt auch dieser pH-Wert-Bereich aufrechterhalten. Gegebenenfalls kann der pH-Wert der Suspensionen auch während des Einsatzes durch Zusatz von Laugen, wie Kalkmilch, aufrechterhalten werden.

Die erfindungsgemäß einsetzbaren Absorptionsmittel b) sind thermisch stabil. Beispielsweise können heiße Abgase mit Temperaturen von über 100°C problemlos der Reinigung unterzogen werden.

Die erfindungsgemäßen Absorptionsmittel b) sind geeignet zur Entfernung von anionischen, organischen und anorganischen Schadstoffen sowie gleichzeitig auch anderen organischen und anorganischen Schadstoffen aus Gasen, Flüssigkeiten und Feststoffen. Sie können allein oder gegebenenfalls in Kombination mit anderen Absorptionsmitteln verwendet werden. So ist es möglich, den erfindungsgemäßen Absorptionsmitteln andere bekannte absorbierende Substanzen zuzusetzen.

Zu reinigende Gase können in üblichen Reinigungsanlagen mit den erfindungsgemäß eingesetzten Absorptionsmitteln in Kontakt gebracht werden, wobei sich letztere entweder in Suspension oder in Form von Feststoffen befinden. Beispielsweise können Abgase durch Suspensionen der erfindungsgemäßen Absorptionsmaterialien geleitet werden, die einen Gehalt der Absorptionsmittel von 0,05 bis 60 Gew.-%, bevorzugt 0,01 bis 10 Gew.-%, aufweisen. Die Absorptionsmittel können in Form konzentrierter Lösungen eingesetzt werden, wobei derartige Lösungen auch zusätzliches Pulver aufgeschlämmt enthalten können. Darüber hinaus ist es möglich, Gase durch übliche Absorptions-Vorrichtungen zu leiten, die die erfindungsgemäß eingesetzten Absorptionsmittel in Pulverform enthalten. Die Absorptionsmittel können auch an einem Filtermaterial absorbiert werden, so daß sie als Filter eingesetzt werden können.

Zur Entfernung von Schadstoffen aus Flüssigkeiten können die erfindungsgemäß eingesetzten Absorptionsmittel in Form von Suspensionen oder festen Pulvern den zu reinigenden Flüssigkeiten zugesetzt werden. Die schadstoffhaltigen Absorptionsmittel können nach dem Reinigungsvorgang durch Absetzen der Filtration oder andere übliche Verfahrensmaßnahmen aus den Flüssigkeiten entfernt werden.

Bei der Reinigung von anionische Schadstoffe enthaltenden Feststoffen können letztere mit Suspensionen der erfindungsgemäß eingesetzten Absorptionsmittel gewaschen werden. Es ist jedoch auch möglich, die Feststoffe mit den erfindungsgemäß eingesetzten absorbierenden pulverförmigen Materialien zu vermischen. Flüchtige organische Materialien werden dann durch chemische Absorption aus den Feststoffen entfernt. Gegebenenfalls ist eine Trennung von Absorptionsmaterial und zu reinigendem Feststoff möglich. Falls dies nicht möglich ist, kann eine sichere Lagerung in Deponien erfolgen, da die organischen Schadstoffe in den erfindungsgemäß eingesetzten Absorptionsmaterialien chemisch gebunden sind und im Gegensatz zu lediglich adsorptiv gebundenen Schadstoffen lagerungsstabil sind.

In der Praxis ergibt sich durch die vorliegende Erfindung die Möglichkeit der Reinigung von industriellen Abgasen, Rauchgasen, wie sie aus Verbrennungsanlagen, beispielsweise bei der Müllverbrennung entstehen, sowie aus Abwässern und Deponieabwässern. Durch Vermischen mit Feststoffen kann eine sichere Absorption anionischer Schadstoffe aus den Feststoffen erzielt werden. Darüberhinaus ist es durch die erfindungsgemäß eingesetzten Absorptionsmittel möglich, die Freisetzung von anionischen Schadstoffen aus festen oder flüssigen Materialien zu verhindern; beispielsweise können feste oder flüssige Materialien mit den erfindungsgemäß eingesetzten Absorptionsmitteln abgedeckt werden, so daß daraus freigesetzte Schadstoffe unmittelbar absorbiert (filtriert) werden und Umweltverschmutzungen vermieden werden können.

Die erfindungsgemäß eingesetzten Absorptionsmittel sind besonders geeignet zur Absorption von anionischen Schadstoffen, wie sie einleitend erwähnt wurden. Die erfindungsgemäß eingesetzten Absorptionsmittel weisen jedoch zusätzlich den Vorteil auf, daß sie als stark basische Materialien zusätzlich saure anorganische wie auch organische Schadstoffe zu binden vermögen. Darüber hinaus wirken sie absorptiv auf Schwermetallionen, insbesondere zweiwertige Schwermetallionen, wie beispielsweise Cadmiumionen. Derartige Schwermetallionen können die Calciumionen des Kations des erfindungsgemäßen Absorptionsmittels ganz oder teilweise ersetzen, wodurch die Absorptionskraft des erfindungsgemäßen Mittels für anionische Materialien nicht verringert wird.

Durch die erfindungsgemäß eingesetzten Absorptionsmittel lassen sich gasförmige, flüssige und feste Schadstoffe entfernen. Gasförmige Schadstoffe, die absorbiert werden können, sind anorganischer und/oder organischer Natur. Absorbierbare anorganische Gase sind z. B. $SO_x$ und $NO_x$, worin x jeweils 2 oder 3 ist, sowie HCl und HF. Letztere sauren Substanzen lassen sich z. B. auch aus Lösungen absorbieren. Gasförmige organische Schadstoffe, die absorbiert werden können, sind z. B. geruchsbelästigende organische Substanzen, wie beispielsweise Mercaptane. Als flüssige Materialien lassen sich vorteilhaft z. B. auch Öle und Teere absorbieren.

Durch die erfindungsgemäßen Absorptionsmittel, insbesondere die Absorptionsmittel b) können auch organische Materialien, wie Öle, Tenside, PAK (biologisch nicht abbaubare Substanzen), sowie auch Metallkomplexe (z. B. EDTA-Komplexe) aus Flüssigkeiten, wie Abwässern, Feststoffen, wie Müllhalden, aber auch aus gasförmigen Materialian entfernt werden.

Auch läßt sich der Sauerstoffbedarf von Gewässern (CSB, BSB und TSB) steuern. Die Absorptionsmittel lassen sich auch zur selektiven Abtrennung gegebenenfalls mit Regenerierung bestimmter Materialien verwenden. Beispielsweise können Tenside von Schleifölen getrennt werden. Hierzu läßt sich der Effekt der Absorbentien b) ausnutzen, bestimmte Molekülformen oder Molekülgrößen bevorzugt einzubauen, wobei dann so vorgegangen werden kann, daß zunächst derartige Mengen an Absorbens zugesetzt werden, daß nur die bevorzugt einzubauenden Moleküle absorbiert werden.

Erfindungsgemäß ist es auch möglich nach dem Absorptionsschritt eine Verfestigung mit Flugasche vorzunehmen. Verfestigt werden können beispielsweise Filtrate, die sich bei der Entfernung von Schwermetallen aus Lösungen ergeben. Die Verfestigung kann beispielsweise durch Ausnutzung des in den erfindungsgemäßen Absorbentien enthaltenen Kristallwassers erfolgen. Gegebenenfalls kann zur Aushärtung notwendiges weiteres Wasser zugesetzt werden. Zur Verfestigung kann beispielsweise das erfindungsgemäße verbrauchte Absorbens mit der Flugasche im Gewichtsverhältnis 1:1 bis 1:3 abgemischt werden.

Es entstehen zementartige Produkte. Durch die Einlagerung der erfindungsgemäß speziell ausgefällten aluminathaltigen Materialien entstehen besonders feste Produkte.

Gemäß einer bevorzugten Ausführungsform der Erfindung können bei der Abwasserbehandlung die Absorbentien a) und b) nacheinander eingesetzt werden. Dabei erfolgt zunächst eine Entfernung von Schwermetallen mit wasserlöslichem Aluminat allein und anschließend eine weitere Entfernung anderer Materialien, wie organischer Materialien, mit Absorbens b).

Mit den erfindungsgemäßen Absorbentien b) können anorganische und organische Schadstoffe aus Gasen, wie Abgasen, Flüssigkeiten, wie Industrieabwässern und Feststoffen, wie z. B. Müll- und Abraumhalden entfernt werden. Letzterer Fall ist von besonderer Bedeutung. Hierzu können Feststoffe mit den erfindungsgemäßen Absorbentien in gelöster bzw. suspendierter Form vermischt oder in fester Form vermischt oder in fester Form überschichtet werden. Die Absorbentien können somit bevorzugt auf Deponien als sogenannte chemische Barriere eingesetzt werden. Sie können in bestehende Deponien durch beispielsweise Injektionen oder in Form von Schlitz- und Spundwänden eingebracht werden.

Erfindungsgemäß wird die Bildung von Ettringittypen vermieden, wie sie bei der Beseitigung von Sulfaten im Stand der Technik bekannt sind. Bevorzugt werden aus Flüssigkeiten erfindungsgemäß keine schwefelhaltigen Materialien aus Abgasen und keine Sulfate aus Abwässern, insbesondere bei pH-Werten über 11 entfernt.

Die folgende Beispiele erläutern die Erfindung, ohne sie zu beschränken.

Beispiel 1

Eine Cadmiumsulfat enthaltende Lösung (13489 ppm $Cd^{2+}$) wurde auf 70 °C erwärmt. Es wurde eine Lösung von Natriumaluminat zugesetzt, bis zur Ausbildung eines pH-Wertes von 12. Es bildete sich eine unlösliche Ausfällung, die nach 60 min abfiltriert werden konnte. In der Lösung war kein Cadmium mehr nachweisbar (Nachweisbarkeitsgrenze 10 ppm Cd).

Die Ausfällung wies folgende definierte Zusammensetzung auf

$$[Cd_4\ Al_2\ (OH)_{12}]^{2+}\ [SO_4 \cdot 14\ H_2O]^{2-}$$

die röntgenographisch nachgewiesen wurde. Die Verbindung ist charakterisiert durch die Gitterkonstanten

$$a_0 = 9,85\ \text{Å}, b_0 = 5,68\ \text{Å}\ c_0 = 22,52\ \text{Å}$$

Beispiel 2

100 kg einer 25 Gew.-% Calciumhydroxidsuspension wird 15 Minuten an der Luft zur Absorption von Kohlendioxid gerührt. Im Verlauf dieses Zeitraums wird eine Lösung von 2,5 kg Natriumaluminat zugefügt. Es entsteht eine helle Suspension von Monocarbonat-Hydrat.

In die erhaltene wäßrige Suspension werden 12 kg einer benzolischen Lösung von Anthracen (10 gewichtsprozentig) eingerührt. Der erhaltene Feststoff wird abfiltriert. Es zeigt sich, daß das gesamte Anthracen aus der Suspension bzw. der benzolischen Lösung verschwunden ist. Die Ausfällung weist einen Schmelzpunkt von 216ºC auf und entspricht der folgenden kristallchemischen Formel

$[Ca_4 Al_2 (OH)_{12}]^{2+} [CO_3 . AC/H_2O]^{2-}$

AC = Anthracen.

Röntgenographisch ergibt sich als stärkste Linie $d_{001}$ = 7,22 Å.

Der thermoanalytische Nachweis erfolgte mit Hilfe der DSC-Analyse. Sie ergab einen exothermen Peak bei 174°C.

**Patentansprüche**

1. Verfahren zur Entfernung von Schadstoffen aus gasförmigen, flüssigen und/oder festen Materialien, dadurch qekennzeichent, daß man die Schadstoffe durch Chemisorption entfernt, wobei als Absorbens zur Chemisorption entweder
   a) eine wäßrige Lösung eines oder mehrerer wasserlöslicher Aluminate bei einer Hydroxylionen-Konzentration. die die Ausfällung von Aluminiumhydroxid ausschließt, oder
   b) ein Absorptionsmittel dient, das erhältlich ist aus einem oder mehreren wasserlöslichen Aluminaten und einer oder mehreren in Wasser ganz oder teilweise löslichen Calciumverbindungen in Gegenwart von Wasser, sowie gegebenenfalls in Gegenwart eines oder mehrerer Carbonate und/oder Kohlendioxid und/oder eines Kohlendioxid enthaltenden Gases.

2. Verfahren nach Anspruch 1, dadurch gekennzeichnet, daß man als wasserlösliche Aluminate Alkalialuminate oder Erdalkalimetallaluminate und/oder solche enthaltende Tonerden und Zemente verwendet.

3. Verfahren nach Anspruch 1, dadurch gekennzeichnet, daß man als wasserlösliches Aluminat Natriumaluminat verwendet.

4. Verfahren nach Anspruch 1, 2 oder 3, dadurch gekennzeichnet, daß man durch Chemisorption (a) Schwermetallionen aus gasförmigen oder flüssigen Substraten entfernt und die Chemisorption bei einem pH-Wert von 8 bis 14 durchführt.

5. Verfahren nach Anspruch 1, 2 oder 3, dadurch gekennzeichnet, daß das Absorptionsmittel (b) erhältlich ist durch Zusatz eines oder mehrerer wasserlöslicher Aluminate zu einer wäßrigen Lösung und/oder Suspension von einer oder mehreren in Wasser ganz oder teilweise löslichen Calciumverbindungen, wobei das Molverhältnis von Calciumverbindung (berechnet als Calciumhydroxid) zu Aluminat (berechnet als Aluminiumhydroxid), 2:1 oder mehr beträgt, gegebenenfalls in Gegenwart eines oder mehrerer Carbonate und/oder von Kohlendioxid und/oder einem Kohlendioxid enthaltenden Gas, worauf das Suspensionswasser gegebenenfalls ganz oder teilweise entfernt wird.

6. Verfahren nach Anspruch 1, 2, 3 oder 5, dadurch gekennzeichnet, daß als in Wasser ganz oder teilweise lösliche Calciumverbindungen Calciumoxid und/oder Calciumhydroxid und als gegebenenfalls eingesetztes Carbonat Calciumcarbonat verwendet werden.

7. Verfahren nach Anspruch 1, 2, 3 oder 5, dadurch gekennzeichnet, daß als in Wasser teilweise lösliche Calciumverbindung Calciumcarbonat verwendet wird.

8. Verfahren nach einem der Ansprüche 1 bis 3 und 5 bis 7, dadurch gekennzeichnet, daß unter Verwendung des Absorptionsmittels (b) Schwermetalle, Schwermetallverbindungen und/oder organische Schadstoffe aus Gasen, Flüssigkeiten und/oder Feststoffen entfernt werden.

9. Verfahren nach einem der Ansprüche 1 bis 3 und 5 bis 7, dadurch gekennzeichnet, daß unter Verwendung des Absorptionsmittels (b) anorganische Schadstoffe aus Gasen und/oder Feststoffen entfernt werden.

10. Verfahren nach einem der Ansprüche 1 bis 3 und 5 bis 7, dadurch gekennzeichnet, daß unter Verwendung des Absorptionsmittels (b) anionische anorganische Schadstoffe aus Gasen, Flüssigkeiten und/oder Feststoffen entfernt werden.

11. Verfahren nach einem der Ansprüche 1 bis 3 oder 5 bis 7, dadurch gekennzeichnet, daß organische und/oder anorganische Schadstoffe aus Gasen, Flüssigkeiten und/oder Feststoffen entfernt werden, wobei unter Verwendung des Absorptionsmittels (b) bei pH-Werten bis zu 10,5 gearbeitet wird.

12. Verfahren nach Anspruch 11, dadurch gekennzeichnet, daß als anorganische Schadstoffe anionische Schadstoffe entfernt werden.

13. Verfahren nach einem der vorhergehenden Ansprüche, dadurch gekennzeichnet, daß das Absorptionsmittel während der Reinigung in situ gebildet wird.

14. Verfahren nach Anspruch 13, dadurch gekennzeichnet, daß das zur Bildung des Absorptionsmittels erforderliche Wasser und/oder gegebenenfalls erforderliche Kohlendioxid aus den zu reinigenden Gasen, Flüssigkeiten und/oder Feststoffen stammt.

15. Absorptionsmittel für organische und anorganische Schadstoffe, erhältlich durch Reaktion eines oder mehrerer wasserlöslicher Aluminate mit einer oder mehreren in Wasser ganz oder teilweise löslichen Calciumverbindungen in Gegenwart von Wasser, wobei das Molverhältnis von Calciumverbindung (berechnet als Calciumhydroxid) zu Aluminat (berechnet als Aluminiumhydroxid), 2:1 oder mehr beträgt, sowie gegebenenfalls in Gegenwart eines oder mehrerer Carbonate und/oder von Kohlendioxid und/oder einem Kohlendioxid enthaltenden Gas, und gegebenenfalls Entfernen von überschüssigem Wasser.

16. Absorptionsmittel nach Anspruch 15, worin die ganz oder teilweise löslichen Calciumverbindungen Calciumoxid und/oder Calciumhydroxid und das gegebenenfalls eingesetzte Carbonat Calciumcarbonat sind.

17. Absorptionsmittel nach Anspruch 15, worin die teilweise lösliche Calciumverbindung Calciumcarbonat ist.

18. Absorptionsmittel nach Anspruch 15, 16 oder 17, worin das wasserlösliche Aluminat ein Alkalialuminat, Erdalkalialuminat und/oder solche enthaltende Tonerden und Zemente, insbesondere Natriumaluminat, sind.

19. Absorptionsmittel nach einem der Ansprüche 15 bis 18, erhältlich durch Zusatz eines oder mehrerer wasserlöslicher Aluminate, insbesondere von Natriumaluminat, zu einer wäßrigen Suspension von Calciumhydroxid, die Calciumcarbonat enthält und/oder der gleichzeitig und/oder anschließend Kohlendioxid oder ein Kohlendioxid enthaltendes Gas zugeführt wird, worauf das Suspensionswasser gegebenenfalls teilweise oder völlig entfernt wird.

20. Absorptionsmittel nach einem der Ansprüche 15 bis 19, enthaltend lamellare Hydrate des Typus

$$[Ca_4 Al_2 (OH)_{12}]^{2+} [CO_3 . aq]^{2-}$$

und/oder

$$[Ca_4 Al_2 (OH)_{12}]^{2+} [OH/0,5CO_3 . aq]^{2-}$$

worin aq Kristallwasser darstellt.

21. Verwendung der Absorptionsmittel nach einem der Ansprüche 15 bis 20 sowie des Absorptionsmittels vom Typus

$$[Ca_4 Al_2 (OH)_{12}]^{2+} [(OH)_2 . aq]^{2-}$$

in fester oder wäßrig suspendierter Form zur Reinigung von Abgasen, Abwässern und festen Abfallmaterialien und zur Verhinderung der Freisetzung von organischen Schadstoffen aus damit verseuchten Sickerwässern und festen Materialien.